# EUROPEAN PATENT SPECIFICATION

(11) **EP 0 935 353 B1**
(45) Date of publication and mention of the grant of the patent: **24.08.2011**
(21) Application number: 98308353.6
(22) Date of filing: 13.10.1998
(51) Int. Cl.: H04W 74/04

(54) **An asymmetric multiple access protocol for a communication system**
Ein asymetrisches Vielfachzugriffsprotokoll für ein Kommunikationssystem
Un protocole d'accès multiple asymétrique pour un système de communication

(30) Priority: 31.10.1997 EP 97308743
(43) Date of publication of application: 11.08.1999
(73) Proprietor: Alcatel-Lucent USA Inc., Murray Hill, NJ 07974 (US)
(72) Inventor: Baden, Charlotte, Malmesbury, Wiltshire SN 16 (GB); Cao, Qiang, Watford, Hertfordshire WD2 5EY (GB); Freiberg, Lorenz Fred, Swindon, Wiltshire SN5 6EB (GB); Reader, David Jonathan, Swindon, Wiltshire SN5 6AW (GB)
(74) Representative: Williams, David John

(56) References cited:
- EP-A- 0 720 405
- EP-A- 0 766 416
- US-A- 5 619 491

## Description

This invention relates to a multiple access protocol for a communication system, and in particular to an asymmetric access protocol for a mobile cellular communication system using time division duplexing (TDD).

In mobile telecommunication systems, data is passed between a mobile end-user device and a base station in an uplink slot, and vice versa in a downlink slot. Similar half duplex communication protocols are used in other communication systems e.g. a ground station to a satellite. In mobile cellular communication systems, an outstanding problem has been that an asymmetry can occur in the ratio of uplink traffic to downlink traffic. For example, using a mobile end user device to send data (e.g. fax or email) can result in several megabytes to be sent on the uplink, whilst only a few bytes are received on the downlink. Current cellular systems have been designed to support asymmetric traffic ratios which are identical across all cells, which leads to an inefficient use of the frequency spectrum. The guard time between slots is an overhead which is always incurred by the system.

EP766416 A describes a wireless multiple access communication systems which dynamically allocates available frame slots to uplink and downlink. A cancellation signal, corresponding to or otherwise representative of the interfering signal, (from an interfering base station to an interfered-with base station) is used. In the interfered-with base station, the cancellation signal is used to cancel or otherwise offset the mixed interference produced in a received composite signal which includes both the desired mobile station to base station (uplink) signal and the interfering signal. Hence it requires interference cancellation technique (timing adjustment, amplitude adjustment, etc), which results in extra hardware implementation complexity. In addition to uplink and downlink, the base station - base station link needs to be maintained, hence the involvement of a Base Station Control (BSC), which is higher level over BS. This causes extra signalling traffic and the mobile terminals are especially vulnerable to extra hardware complexity. EP766416 describes a system used purely for cancelling or Reducing co-channel interference purposes by the means of slot allocation (between downlink and uplink) in a frequency reuse cell (essentially non-adjacent cells system.

EP 720 321 A1 describes a similar, TDMA only system. The system is used in either non-cellular systems or cellular system with identical asymmetric pattern, that is where the asymmetric ratio of each cell is the same. The system uses 'flexible uplink/downlink allocation' achieved by system level flexible uplink/downlink allocation, in which the asymmetric ratio is all the same for all cells.

There is thus a need for a flexible and efficient asymmetric multiple access TDD protocol, which increases the amount of traffic that can be supported over a communication channel without adversely affecting the Quality of Service (QoS) experienced by users of the communication system.

European patent publication EP-A-0720405 is referred to as background. It is known from EP-A-0720405 to provide a method of time division duplexing in a mobile cellular communication system comprising:
dividing the communication system into a plurality of cells, each cell being served by a base station;
providing a channel in the communication system over which a base station and at least one mobile station may communicate;
using time division duplexing to divide the channel into a plurality of frames, each frame consisting of a plurality of slots;
co-ordinating the time division duplexing across a plurality of cells; and in which
each base station allocates slots to either uplink communication or downlink communication to optimise throughput in the channel;
in which
each frame includes a compulsory uplink communication slot and a compulsory downlink communication slot.

The present invention is characterised over the disclosure of EP-A-0720405 in that inhibiting a mobile station from using selected slots of frames dependent upon the mobile station being determined as is an area where drown-out would otherwise occur, the selected slots not including the compulsory uplink communication slot and compulsory downlink communication slot.

The position of the compulsory slots may be determined by a central controller and the position, within the frame, of the compulsory slots will be the same in each cell.

The invention provides an asymmetric TDD system in which resources are allocated on a cell by cell basis, thereby achieving a more flexible and efficient system. All data packets transmitted in a slot can be arranged into consecutive slots; that is uplink slots and downlink slots can be arranged consecutively, thereby obviating the need for guard time between the same type of slot. Since the invention allows an asymmetric traffic ratio (uplink:downlink) for each cell the channel efficiency is improved. Since each base station may allocate uplink and downlink slots according to the type of traffic experienced by a cell, the traffic ratio may be adjusted dynamically.

The slots may be arranged into frames, with the asymmetric traffic ratio being repeated on a frame by frame basis. The base station may broadcast the traffic ratio (i.e. the uplink and downlink allocation) on a general information channel BCCH, so that each mobile station entering a cell is provided with the traffic ratio.

The central co-ordinating controller may also organise the length of a frame, and govern the timing of frames from cell to cell. Each frame may include a compulsory uplink slot and a compulsory downlink slot, which may for example take the first two slots of each frame. The compulsory slots may be the same for each cell, leading to easy handover between cells, for a mobile station travelling between cells. The frame rate and compulsory slot allocation may be chosen in such a way that a mobile station, restricted to the compulsory slots only, will not suffer from a reduced QoS, particularly if running a delay sensitive application.

A more detailed description of a practical mobile cellular communication system is described below, by way of example, and with reference to the following figures, in which:

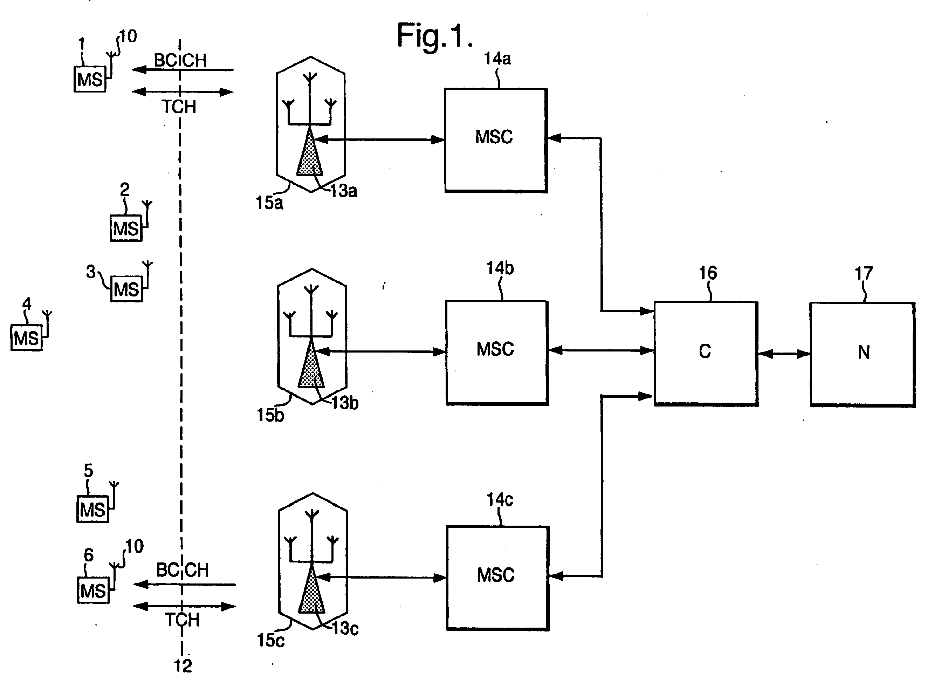

Figure 1 shows a block diagram of a mobile cellular communication system.
Figure 2 shows an area of the communication system divided into overlapping cells.
Figure 3 illustrates frame traffic for adjacent cells within the communication system.
Figure 4 illustrates the inhibiting area, the collision area and the non-inhibiting area for three adjacent cells.

An end-user device (Mobile Station 1,2,3,4,5,6, etc) may use any one of a number of communication protocols to communicate with its nearest base station 13, via antennae 10 and 11, across an air interface 12. In the following embodiment, the communication protocol used is CDMA (code division multiple access). This enables the mobile stations to communicate using a coded spread spectrum signal with codes which are almost uncorrelated, thereby providing a multiple access communications protocol in which the collisions are not destructive of other signals broadcast concurrently. Once a communication channel has been established between mobile station and its closest base station 13, the mobile switching centre 14a may establish a further connection to another mobile switching centre 14b or to the public voice or data networks 17 via the central co-ordinating controller 16.

The base station continually broadcasts information on its broadcast control channel (BCCH) to all mobile stations within range. The BCCH information includes various codes and control signals necessary for a mobile station to register into the system and the traffic ratio (uplink:downlink). Each mobile station uses the relative strength of the BCCH from neighbouring base stations to determine whether handover to another base station is appropriate. A base station may page a mobile station on the paging channel (PCH) or, alternatively, a mobile station may request access to the system on the random access channel (RACH). The base station and the mobile communication over the traffic channel (TCH), whilst the base station transmits feedback control over the associated control channel (ACCH). Data transmitted over the TCH is divided into packets, which are transmitted in a particular slot with appropriate control bits.

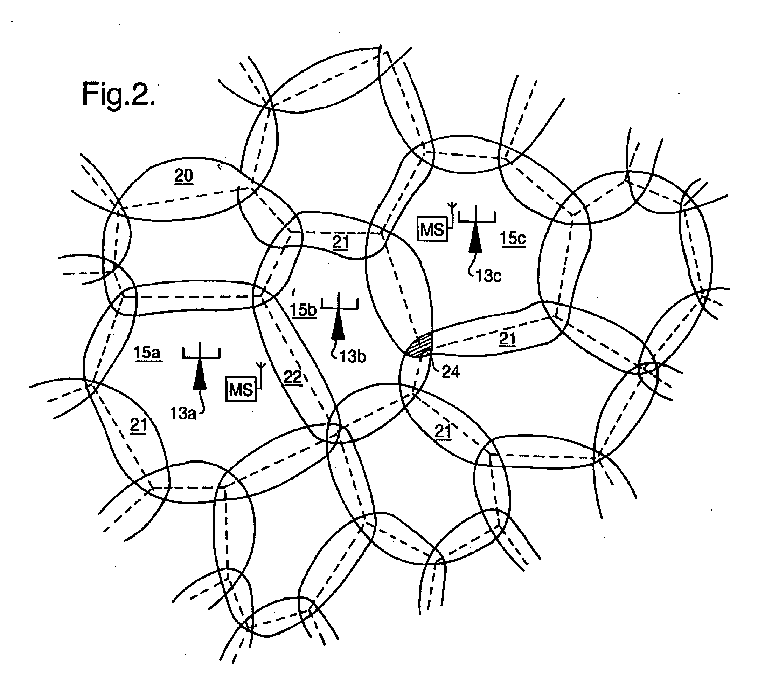

Figure 2 shows a communication system with overlapping cell coverage (15a, 15b, 15c) supplied by a number of base stations (13a, 13b, 13c). Although the cell coverage is more often represented as a honeycomb structure, the actual coverage depends on the environmental features, and a large overlap (e.g. 20) can occur. The general overlap (21) is the handover area in which the signals from adjacent base stations are received by a mobile station with equal strength. A mobile station may request handover from one base station (13a) to another (13b) in this area (22).

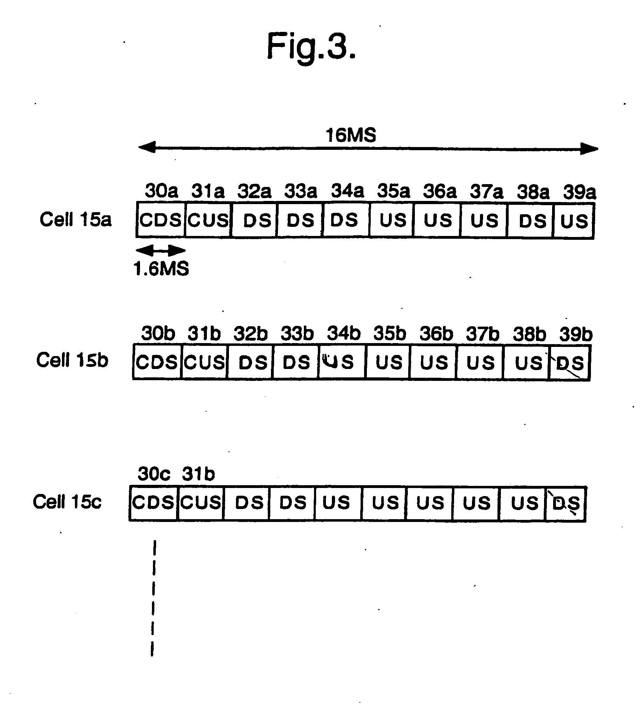

Figure 3 illustrates the uplink and downlink traffic in a frame for three adjacent cells 15a, 15b, 15c. Each frame includes a compulsory downlink slot (CDS) which the central controller 16 has allocated to the first slot of each frame (30a, 30b, 30c). The frames also include a compulsory uplink slot (CUS) which the central controller 16 allocates to the second slot of each frame (31a, 31b, 31c).

As may be seen from Figure 3, cells 15b and 15c are using the same traffic ratio, which in this case is 4:6 (downlink:uplink) distributed as 1 down: 1 up: 2 down: 5 up: 1 down. Cell 15a is using a different traffic ratio of 5:5, distributed as 1 down: 1 up: 3 down: 3 up: 1 down: 1 up.

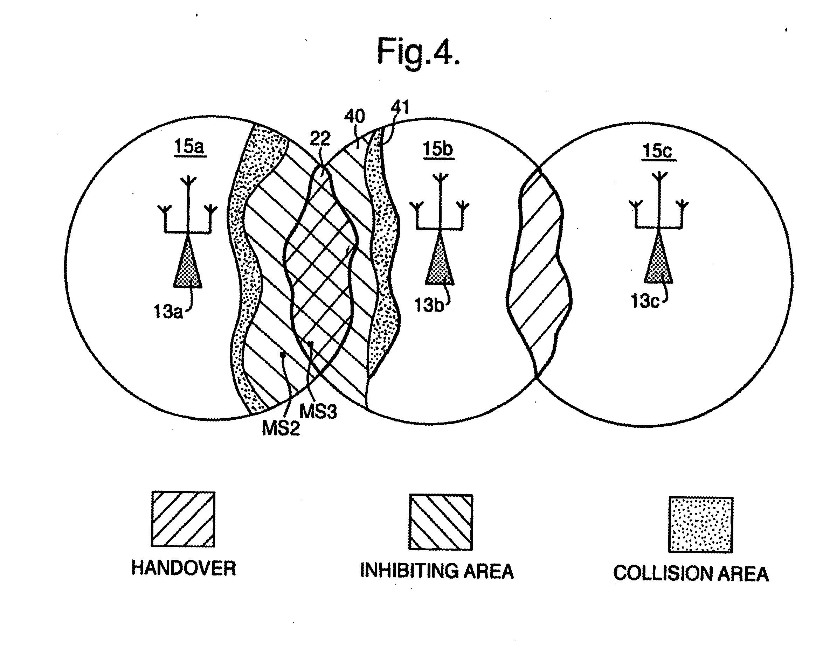

It may occur that near a handover area "drown out" will corrupt the signals of adjacent mobile stations which are registered to two adjacent base stations. That is, where mobile station 2 and mobile station 3 are physically close together and mobile station 2 is registered with base station 13a, whilst mobile station 3 is registered with base station 13b. Mobile station 3, which is active on an uplink slot in slot 34b may drown-out the signal from base station 13a, which is trying to communicate on a downlink to mobile station 2. Mobile stations 2 and 3 may also collide in slots 37 and 38. In order to overcome this, mobile stations entering an inhibiting area (40) are required to use only the compulsory uplink and the compulsory downlink slots (CUS, CDS). The size of the inhibiting area will depend on a number of factors, such as signal power control and the signal processing ability of both the base stations and the mobile stations. Also shown on Figure 4 is the collision area 41, which is the area of cell coverage where collision actually occur, requiring the data packet transmitted in corrupted slot to be retransmitted.

The inhibiting area is determined by each mobile stations' ability to recognise that it is an area where collisions are likely. A reasonable estimate of the collision area can be determined using existing cellular communications technology, such as the GSM (Group Special Mobile or Global System for Mobile Communications) system. Using a similar algorithm to that used for handover, the inhibiting area will consist of the area of overlap between two cells. As in the handover procedure, mobile stations will be continually searching for the beacon signal (BCCH signal) broadcast constantly by all base stations. The beacon signal will contain information concerning the traffic ratio currently being employed by the base station. If the adjacent base station beacon signal indicates a different traffic ratio to that currently employed by the mobile station and when the power level of the beacon signal reaches a predetermined threshold, the mobile will consider itself within an inhibiting area. Mobile stations may not recognise the full extent of the collision area since collisions depend upon the presence of two interfering mobile stations.

In an ideal system, the collision area and the inhibiting area will overlap exactly. Each mobile system may be provided with geographical location mechanism, enabling the mobile station to accurately determine its position relative to each base station. Such a mechanism would utilise, for example, base station triangulation. Alternatively, each mobile could be fitted with a satellite positioning system such as a GPS locator. The traffic ratio of each cell is known by the central controller. This information, along with the accurate positioning information determined for each mobile station would enable the central controller to determine whether a particular mobile station needs to be fully or partially inhibited. It may not be necessary to restrict mobile stations to the compulsory slots since, as shown in Figure 3, slots 32, 33, 35, 36 and 37 have been given the same allocation by base stations 13a and 13b (cells 15a and 15b). Thus mobile stations 2 and 3 could be partially inhibited, that is prevented from using slots 34, 38 and 39 when in the inhibiting area 40. Mobile stations may be required to use only the compulsory slots at, for example, the intersection of three cells, such as shown by point 24 of Figure 2.

Returning to Figure 3, the frame length is shown as 16ms, and the slot length is 1.6ms. If a voice transmission is used as an example, coded by a voice coder at a rate of 32000 bits/second, or 512 bits/frame. Assuming 64 information bits are added, for header and other information, this gives a speech data packet of 576 bits. Thus the data rate must be at least 360,000 bits per second, if the mobile station is limited to sending all the speech data in the compulsory uplink.

The foregoing is illustrative of the invention and other embodiments, falling within the scope of the invention would be immediately apparent to one skilled in the art.

## Claims

1. A method of time division duplexing in a mobile cellular communication system comprising:
dividing the communication system into a plurality of cells (15a,15b,15c), each cell being served by a base station (13a,13b,13c);
providing a channel in the communication system over which a base station and at least one mobile station may communicate;
using time division duplexing to divide the channel into a plurality of frames, each frame consisting of a plurality of slots (30a to 39a,30b to 39b,30C to 39c);
co-ordinating the time division duplexing across a plurality of cells; and in which
each base station (13a,13b,13c) allocates slots to either uplink communication or downlink communication to optimise throughput in the channel;
in which
each frame includes a compulsory uplink communication slot (31a,31b,31c) and a compulsory downlink communication slot (30a,30b,30c), and **characterised by**
inhibiting a mobile station from using selected slots of frames dependent upon the mobile station being determined as being in an area (40) where drown-out would otherwise occur, the selected slots not including the compulsory uplink communication (31a,31b,31c) slot and compulsory downlink communication slot (30a,30b,30c).

2. A method as claimed in claim 1 wherein the inhibiting of the mobile station is selectably inhibiting the mobile station from using all but the compulsory uplink communication slot (31a,31b,31c) and compulsory downlink communication slot (30a,30b,30c) of the frames.

3. A method as claimed in claim 1 **characterised in that** the position of the compulsory slots is determined by a central controller.

4. A method as claimed in claim 2 **characterised in that** the position of the compulsory slots is the same in each cell.

5. System for time division duplexing in a mobile cellular communication system comprising:
at least one mobile station (2,3,4,5,6)°, a plurality of base stations (13a, 13b, 13c), each of which serves a cell (15a,15b,15c) of the communications system;
a channel in the communication system over which a base station and at least one mobile station may communicate, the channel being divided, using time division duplexing, into a plurality of frames, each frame consisting of a plurality of slots (30a to 39a,30b to 39b,30c to 39c);
a central controller(16) for co-ordinating the time division duplexing across a plurality of cells, and in which
each base station is adapted to allocate slots to either uplink communication or downlink communication to optimise throughput in the channel;
wherein
each frame includes a compulsory uplink slot (31a,31b,31c) and a compulsory downlink slot (30a,30b,30c),
**characterised in that** the system comprises means for inhibiting
a mobile station from using selected slots of frames dependent upon the mobile station being determined as being in an area (40) where drown-out would otherwise occur,
the selected slots not including the compulsory uplink communication slot (31a,31b,31c) and compulsory downlink communication slot (30a,30b,30c).

6. System as claimed in claim 5 wherein the mobile station is selectably inhibited from using all but the compulsory uplink communication slot (31a,31b,31c) and compulsory downlink communication slot (30a,30b,30c) of the frames.

7. System as claimed in claim 5 **characterised in that** the central controller (16) is adapted to determine the position of the compulsory slots.

8. System as claimed in claim 7 **characterised in that** the central controller (16) is adapted to place the compulsory slots in the same position in each frame and in each cell.

## Patentansprüche

1. Ein Zeitduplexverfahren in einem zellularen Mobilfunk-Kommunikationssystem, umfassend:
Unterteilen des Kommunikationssystems in eine Mehrzahl von Zellen (15a, 15b, 15c), wobei jede Zelle von einer Basisstation (13a, 13b, 13c) bedient wird;
Bereitstellen eines Kanals im Kommunikationssystem, über welchen eine Basisstation und mindestens eine Mobilstation miteinander kommunizieren können;
Verwenden von Zeitduplex für die Unterteilung des Kanals in eine Mehrzahl von Rahmen, wobei jeder Rahmen aus einer Mehrzahl von Zeitschlitzen (30a bis 39a, 30b bis 39b, 30c bis 39c) besteht;
Koordinieren des Zeitduplex quer durch die Mehrzahl von Zellen; und wobei
jede Basisstation (13a, 13b, 13c) Zeitschlitze entweder an die Uplink-Kommunikation oder an die Downlink-Kommunikation zuweist, um den Durchsatz im Kanal zu optimieren;
wobei
jeder Rahmen einen zwingend vorgegebenen Uplink-Kommunikationszeitschlitz (31a, 31b, 31c) und einen zwingend vorgegebenen Downlink-Kommunikationszeitschlitz (30a, 30b, 30c) umfasst, und **gekennzeichnet durch**
Hemmen einer Mobilstation an der Benutzung ausgewählter Zeitschlitze von Rahmen in Abhängigkeit davon, ob die Mobilstation als sich in einem Bereich (40) aufhaltend bestimmt wird, wo anderenfalls ein Übertönen auftreten würde, wobei die ausgewählten Zeitschlitze weder den zwingend vorgegebenen Uplink-Kommunikationszeitschlitz (31 a, 31 b, 31 c) noch den zwingend vorgegebenen Downlink-Kommunikationszeitschlitz (30a, 30b, 30c) umfassen.

2. Verfahren nach Anspruch 1, wobei das Hemmen der Mobilstation die Mobilstation selektiv an der Verwendung aller Zeitschlitze, mit Ausnahme des zwingend vorgegebenen Uplink-Kommunikationszeitschlitzes (31a, 31b, 31c) und des zwingend vorgegebenen Downlink-Kommunikationszeitschlitzes (30a, 30b, 30c), der Rahmen hemmt.

3. Verfahren nach Anspruch 1, **dadurch gekennzeichnet, dass** die Position der zwingend vorgegebenen Zeitschlitze von einer Zentralsteuerung bestimmt wird.

4. Verfahren nach Anspruch 2, **dadurch gekennzeichnet, dass** die Position der zwingend vorgegebenen Zeitschlitze in jeder Zelle dieselbe ist.

5. Zeitduplexsystem in einem zellularen Mobilfunk-Kommunikationssystem, umfassend:
Mindestens eine Mobilstation (2, 3, 4, 5, 6) und eine Mehrzahl von Basisstationen (13a, 13b, 13c), welche jeweils eine Zelle (15a, 15b, 15c) des Kommunikationssystems bedienen;
einen Kanal im Kommunikationssystem, über welchen eine Basisstation und mindestens eine Mobilstation kommunizieren können, wobei der Kanal unter Verwendung von Zeitduplex in eine Mehrzahl von Rahmen unterteilt ist, wobei jeder Rahmen aus einer Mehrzahl von Zeitschlitzen (30a bis 39a, 30b bis 39b, 30c bis 39c) besteht;
eine Zentralsteuerung (16) für die Koordinierung des Zeitduplex quer durch eine Mehrzahl von Zellen, und wobei
jede Basisstation dazu ausgelegt ist, entweder der Uplink-Kommunikation oder der Downlink-Kommunikation Zeitschlitze zuzuweisen, um den Durchsatz im Kanal zu optimieren;
wobei
jeder Rahmen einen zwingend vorgegebenen Uplink-Zeitschlitz (31a, 31b, 31c) und einen zwingend vorgegebenen Downlink-Zeitschlitz (30a, 30b, 30c) umfasst,
**dadurch gekennzeichnet, dass** das System Mittel zum Hemmen einer Mobilstation an der Benutzung von ausgewählten Zeitschlitzen von Rahmen in Abhängigkeit davon, ob bestimmt wird, dass sich die Mobilstation in einem Bereich (40) befindet, in welchem anderenfalls ein Übertönen auftreten würde, umfasst,
die ausgewählten Zeitschlitze keinen zwingend vorgegebenen Uplink-Kommunikationszeitschlitz (31a, 31b, 31c) und keinen zwingend vorgegebenen Downlink-Kommunikationszeitschlitz (30a, 30b, 30c) umfassen.

6. System nach Anspruch 5, wobei die Mobilstation selektiv an der Verwendung aller Zeitschlitze, mit Ausnahme des zwingend vorgegebenen Uplink-Kommunikationszeitschlitzes (31a, 31b, 31c) und des zwingend vorgegebenen Downlink-Kommunikationszeitschlitzes (30a, 30b, 30c), der Rahmen gehemmt wird.

7. System nach Anspruch 5, **dadurch gekennzeichnet, dass** die Zentralsteuerung (16) für die Bestimmung der Position der zwingend vorgegebenen Zeitschlitze ausgelegt ist.

8. System nach Anspruch 7, **dadurch gekennzeichnet, dass** die Zentralsteuerung (16) für das Anordnen der zwingend vorgegebenen Zeitschlitze in derselben Position in jedem Rahmen und in jeder Zelle ausgelegt ist.

## Revendications

1. Procédé de duplexage par répartition dans le temps dans un système de communication cellulaire mobile comprenant :
Division du système de communication en une pluralité de cellules (15a, 15b, 15c), chaque cellule étant desservie par une station de base (13a, 13b, 13c) ;
Fourniture d'un canal dans le système de communication par le biais duquel une station de base et au moins une station mobile peuvent communiquer ;
Utilisation du duplexage par répartition dans le temps pour diviser le canal en une pluralité de trames, chaque trame se composant d'une pluralité de créneaux (30a à 39a, 30b à 39b, 30C à 39c) ;
Coordination du duplexage par répartition dans le temps entre une pluralité de cellules ; et dans lequel
chaque station de base (13a, 13b, 13c) attribue des créneaux soit à la communication de liaison montante, soit à la communication de liaison descendante afin d'optimiser le débit dans le canal ;
dans lequel
chaque trame contient un créneau de communication de liaison montante obligatoire (31 a, 31 b, 31 c) et un créneau de communication de liaison descendante obligatoire (30a, 30b, 30c), et **caractérisé par**
Inhibition de l'utilisation par une station mobile des créneaux sélectionnés des trames en fonction de la détermination de la présence ou non de la station mobile dans une zone (40) où il se produirait sinon une couverture, les créneaux sélectionnés ne comprenant pas le créneau de communication de liaison montante obligatoire (31a, 31b, 31c) et le créneau de communication de liaison descendante obligatoire (30a, 30b, 30c).

2. Procédé selon la revendication 1, dans lequel l'inhibition de la station mobile est l'inhibition sélective de l'utilisation par la station mobile de tous les créneaux des trames sauf le créneau de communication de liaison montante obligatoire (31 a, 31b, 31c) et le créneau de communication de liaison descendante obligatoire (30a, 30b, 30c).

3. Procédé selon la revendication 1, **caractérisé en ce que** la position des créneaux obligatoires est déterminée par un contrôleur central.

4. Procédé selon la revendication 2, **caractérisé en ce que** la position des créneaux obligatoires est la même dans chaque cellule.

5. Système de duplexage par répartition dans le temps dans un système de communication cellulaire mobile comprenant :
au moins une station mobile (2, 3, 4, 5, 6), une pluralité de stations de base (13a, 13b, 13c) desservant chacune une cellule (15a, 15b, 15c) du système de communications ;
un canal dans le système de communication par le biais duquel une station de base et au moins une station mobile peuvent communiquer, le canal étant divisé, en utilisant le duplexage par répartition dans le temps, en une pluralité de trames, chaque trame se composant d'une pluralité de créneaux (30a à 39a, 30b à 39b, 30c à 39c) ;
un contrôleur central (16) pour coordonner le duplexage par répartition dans le temps entre une pluralité de cellules ; et dans lequel
chaque station de base est adaptée pour attribuer des créneaux soit à la communication de liaison montante, soit à la communication de liaison descendante afin d'optimiser le débit dans le canal ;
dans lequel
chaque trame contient un créneau de liaison montante obligatoire (31 a, 31b, 31c) et un créneau de liaison descendante obligatoire (30a, 30b, 30c),
**caractérisé en ce que** le système comprend des moyens pour inhiber :
l'utilisation par une station mobile des créneaux sélectionnés des trames en fonction de la détermination de la présence ou non de la station mobile dans une zone (40) où il se produirait sinon une couverture,
les créneaux sélectionnés n'incluant pas le créneau de liaison montante obligatoire (31 a, 31 b, 31c) et le créneau de liaison descendante obligatoire (30a, 30b, 30c).

6. Système selon la revendication 5, dans lequel l'inhibition de la station mobile est l'inhibition sélective de l'utilisation par la station mobile de tous les créneaux des trames sauf le créneau de communication de liaison montante obligatoire (31a, 31b, 31c) et le créneau de communication de liaison descendante obligatoire (30a, 30b, 30c).

7. Système selon la revendication 5, **caractérisé en ce que** le contrôleur central (16) est adapté pour déterminer la position des créneaux obligatoires.

8. Système selon la revendication 7, **caractérisé en ce que** le contrôleur central (16) est adapté pour placer les créneaux obligatoires dans la même position dans chaque trame et dans chaque cellule.
